# EUROPÄISCHE PATENTSCHRIFT

(11) **EP 2 391 562 B1**
(45) Veröffentlichungstag und Bekanntmachung des Hinweises auf die Patenterteilung: **10.07.2013**
(21) Anmeldenummer: 09774668.9
(22) Anmeldetag: 10.12.2009
(51) Int. Cl.: B65G 19/02, B65G 47/28, B65G 54/02

(54) **TRANSPORTVORRICHTUNG**
TRANSPORT APPARATUS
DISPOSITIF DE TRANSPORT

(30) Priorität: 09.09.2009 DE 102009029314; 29.01.2009 DE 102009000480
(43) Veröffentlichungstag der Anmeldung: 07.12.2011
(73) Patentinhaber: Robert Bosch GmbH, 70442 Stuttgart (DE)
(72) Erfinder: LOECHT, Heinrich, 71522 Backnang (DE)
(86) Internationale Anmeldenummer: PCT/EP2009/066794
(87) Internationale Veröffentlichungsnummer: WO 2010/086060

(56) Entgegenhaltungen:
- EP-A2- 0 346 815
- WO-A1-03/105324
- US-A- 4 825 111
- US-B1- 6 876 896

## Beschreibung

### Stand der Technik

Die vorliegende Erfindung betrifft eine Transportvorrichtung zur Förderung eines Produkts zur Beschickung von Verpackungsmaschinen, insbesondere horizontalen Schlauchbeutelmaschinen oder Kartonierem mit Stückgütern.

Transportsysteme mit voneinander unabhängig angetriebenen Förderelementen zur Produktbeschickung von Verpackungsmaschinen sind aus dem Stand der Technik in unterschiedlichen Ausgestaltungen, wie z. B. aus den Druckschriften US 6,876,896 B1, WO 03/105324 A1 und US 5,225,725 bekannt. Hierbei weisen diese Systeme einen stationären umlaufenden Aufbau auf, bei dem die Förderelemente nach dem Förderprozess zum Produkteinlauf zurückgeführt werden. Für die zur Rückführung der Förderelemente zur Produktzuführung erforderliche Umlenkung werden möglichst kleine Kurvenradien verwendet, um einen platzsparenden kompakten Aufbau zu erreichen. Die dabei eingesetzten V-förmigen Führungsrollen der Förderelemente können hierbei insbesondere für den Übergang vom linearen Förderbereich zum Kurvenbereich mit kleinen Kurvenradien nicht spielfrei eingestellt werden. Ferner erzeugt die V-Form der Führungsrollen hohe Reibkräfte gegenüber der Laufschiene und beide Teile sind trotz kontinuierlicher Schmierung einem hohen Abriebverschleiß ausgesetzt.

Eine Transportvorrichtung mit den Merkmalen des Oberbegriffs des Anspruchs 1 ist aus der US 6,876,896 B1 bekannt.

### Offenbarung der Erfindung

Die erfindungsgemäße Transportvorrichtung zur Produktförderung mit den Merkmalen des Anspruchs 1 weist demgegenüber den Vorteil auf, dass hierbei eine spielfreie Führung aufgrund einer durch eine verwendete Linearmotor-Antriebsvorrichtung auf einen Permanentmagnet in einem Förderelement einwirkenden magnetischen Vorspannkraft gegeben ist. Erfindungsgemäß umfasst die Transportvorrichtung zur Förderung eines Produkts ein bewegbares Förderelement zum Fördern eines Produkts, eine ortsfeste, umlaufend angeordnete Laufschiene zur Führung des Förderelements, und die Linearmotor-Antriebsvorrichtung zum Antrieb des Förderelements. Das Förderelement weist einen Grundkörper, einen Schiebefinger, welcher mit dem Produkt in Kontakt bringbar ist, und den Permanentmagneten auf, der mit der Linearmotor-Antriebsvorrichtung in Wirkverbindung steht. Das Förderelement weist eine erste Laufeinrichtung, die in Laufrichtung des Förderelements auf einer Seite des Förderelements angeordnet ist, und eine zweite Laufeinrichtung auf, die in Laufrichtung des Förderelements auf der anderen Seite des Förderelements angeordnet ist. Das Förderelement weist ferner eine Führungseinrichtung auf, die so angeordnet ist, dass sie durch eine resultierende Vorspannkraft zwischen dem Permanentmagneten und der Linearmotor-Antriebsvorrichtung eine spielfreie Führung des Förderelements an der Laufschiene ausführt. Daher kann ein sehr kompakter Aufbau mit minimalen Radien im Umlenkbereich der Laufschiene realisiert werden. Die Laufschiene der Transportvorrichtung ist vorzugsweise im Wesentlichen einstückig mit einem aus dem Vollmaterial ausgenommen Kanal für die Förderelemente ausgebildet.

Die Unteransprüche zeigen bevorzugte Weiterbildungen der Erfindung.

Besonders bevorzugt ist die erste und/oder zweite Laufeinrichtung des Förderelements eine Laufrolle. Weiter bevorzugt ist die Führungseinrichtung des Förderelements eine Führungsrolle. Die Verwendung von Rollen hat dabei neben einer kostengünstigen Herstellbarkeit auch den Vorteil einer sicheren und einfachen Bewegung des Förderelements.

Vorzugsweise sind die ersten und zweiten Laufrollen und die Führungsrolle des Förderelements der Transportvorrichtung als profilfreie Rollen ausgebildet, die nur in formschlussfreier Berührung mit der Laufschiene stehen. Dadurch kann der Abrieb und der Verschleiß zwischen den Laufrollen, der Führungsrolle und der Laufschiene insbesondere in Kurvenbereichen mit kleinen Radien erheblich reduziert werden.

Gemäß einer weiteren bevorzugten Ausführungsform der Erfindung sind die Achsen der ersten und zweiten Laufrollen am Förderelement versetzt zueinander angeordnet, um Laufrollen mit möglichst großem Durchmesser einsetzen zu können, so dass eine verschleißarme und laufruhige Bewegung des Förderelements gegeben ist.

Weiterhin bevorzugt weist das Förderelement der Transportvorrichtung ein Gleitelement auf, welches mit der Laufschiene zur Abstützung des Förderelements bei Drehmomentenbelastung um die Z-Achse in Kontakt ist.

Gemäß einer weiteren bevorzugten Ausführungsform der Erfindung weist die Laufschiene einen Profilvorsprung auf, der zwischen Führungsrolle und dem Gleitelement angeordnet ist. Dadurch erfolgt neben der reibungsarmen Führung ferner eine Abstützung senkrecht zur Laufrichtung infolge der resultierenden Vorspannkraft zwischen dem Permanentmagnet und der Linearmotor-Antriebsvorrichtung.

Weiterhin weist die erfindungsgemäße Transportvorrichtung entsprechend einer alternativen bevorzugten Ausgestaltung zwei Führungsrollen auf, wodurch eine Abstützung am Profilvorsprung der Laufschiene ohne die Anordnung eines stationären Gleitelements am Förderelement möglich ist.

In weiterer vorzugsweiser Ausgestaltung sind die erste Laufrolle und eine dritte Laufrolle des Förderelements der erfindungsgemäßen Transportvorrichtung auf einer Seite des Förderelements angeordnet. Dadurch wird eine exaktere spielfreie Führung des Förderelements in Laufrichtung erreicht.

Vorzugsweise sind beim Förderelement der erfindungsgemäßen Transportvorrichtung die erste Laufrolle in einer ersten Ebene und die zweite Laufrolle in einer zweiten Ebene angeordnet, wobei die erste Ebene und die zweite Ebene parallel zueinander angeordnet sind,

wobei die dritte Laufrolle des Förderelements in einer dritten Ebene angeordnet ist, die parallel zu den ersten und zweiten Ebenen angeordnet ist. Dadurch kann das Förderelement auf einem weiteren Oberflächenbereich der Laufschiene radial abgestützt werden.

In weiterer vorzugsweiser Ausgestaltung sind an einem Umlenkbereich der Laufschiene für jede der Laufrollen jeweils separate Kurven mit entsprechenden Bahnkurven vorgesehen, wobei sich die Bahnkurven der Kurvenbahnen voneinander unterscheiden, um eine Absenkung des Schiebefingers senkrecht zur Förderrichtung vor der Umlenkung des Förderelements zu ermöglichen. Durch die zuerst erfolgende Absenkung des Schiebefingers wird eine störende Beeinträchtigung bzw. Verschiebung des zu fördernden Produkts durch den zu früh umgelenkten und schwenkenden Schiebefinger verhindert. Zudem kann durch die separaten Kurvenbahnen eine getrennte Abstützung jeder Laufrolle an der Laufschiene erfolgen, die wesentlich zur betriebssicheren, reibungsarmen und spielfreien Umlenkung des Förderelements auch bei kleinsten Kurvenradien beiträgt.

Gemäß einer anderen Alternative der vorliegenden Erfindung sind die Laufeinrichtung und/oder die Führungseinrichtung des Förderelements statt als Laufrollen als elektromagnetische oder pneumatische Laufelemente ausgebildet. Hierdurch kann ein berührungsloses Bewegen des Förderelements sichergestellt werden. Dies hat den großen Vorteil, dass weder am Förderelement noch an der Laufschiene ein Verschleiß auftreten kann, so dass eine hohe Lebensdauer erreichbar ist. Bei Verwendung eines elektromagnetischen Lauf- oder Führungselements beruht das Funktionsprinzip auf einer Regelung von Abstoßungskräften zwischen autonomen, über Stromrichter gespeiste Spulen und den mit Permanentmagneten bestückten Förderelementen. Eine Position des Förderelements wird vorzugsweise über einen Wegsensor erfasst.

Weiter bevorzugt umfasst die elektromagnetische Führungseinrichtung eine Vielzahl von Spulen an der Laufschiene und wenigstens einen Permanentmagneten am Förderelement. Weiter ist bevorzugt eine Steuerung vorgesehen, um einen Abstand zwischen den Spulen und den Permanentmagneten konstant zu halten. Auf diese Weise kann eine magnetisch vorgespannte Führung für das Förderelement erreicht werden.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: eine schematische horizontale Schnittansicht der erfindungsgemäßen Transportvorrichtung gemäß einem ersten Ausführungsbeispiel,
- Figur 2: eine perspektivische Darstellung des Förderelements von Figur 1,
- Figur 3: eine horizontale Schnittansicht des Förderelements von Figur 2,
- Figur 4: eine prinzipielle Schnittansicht des Umlenkbereichs der erfindungsgemäßen Transportvorrichtung zur Verdeutlichung des Bewegungsablaufs des auf den verschiedenen Bahnkurven abrollenden Förderelements,
- Figur 5: eine perspektivische Darstellung eines zweiten Ausführungsbeispiels des Förderelements der erfindungsgemäßen Transportvorrichtung,
- Figur 6: eine schematische Schnittansicht einer Transportvorrichtung gemäß einem dritten Ausführungsbeispiel der Erfindung, und
- Figur 7: eine schematische Darstellung der Funktion einer elektromagnetischen Führungseinrichtung gemäß dem dritten Ausführungsbeispiel.

### Ausführungsformen der Erfindung

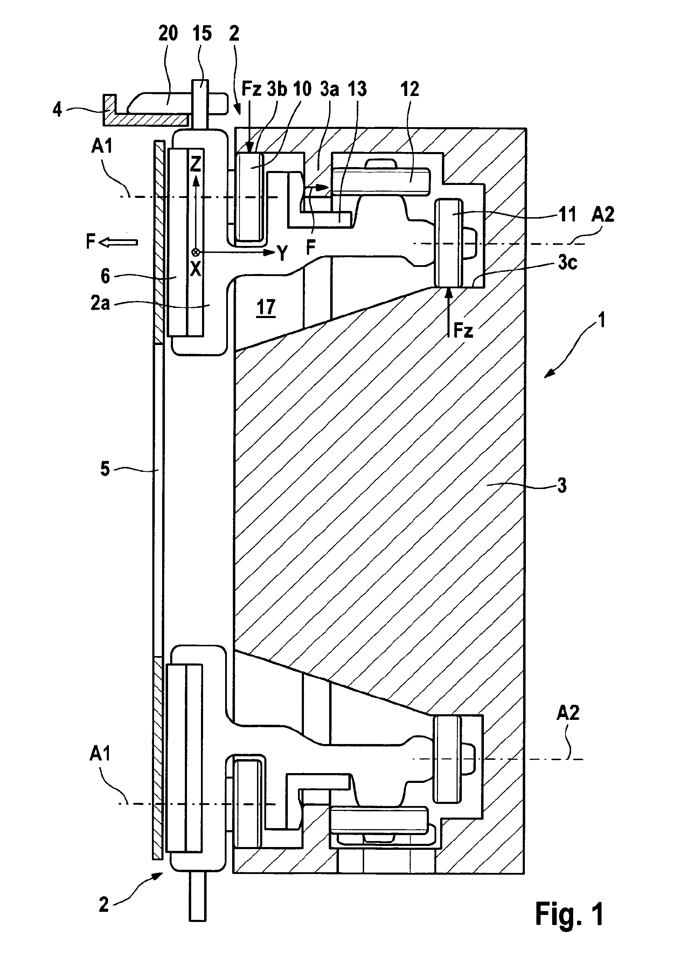

Nachfolgend wird unter Bezugnahme auf die Figuren 1 bis 4 eine Transportvorrichtung 1 gemäß einem ersten bevorzugten Ausführungsbeispiel der Erfindung im Detail beschrieben.

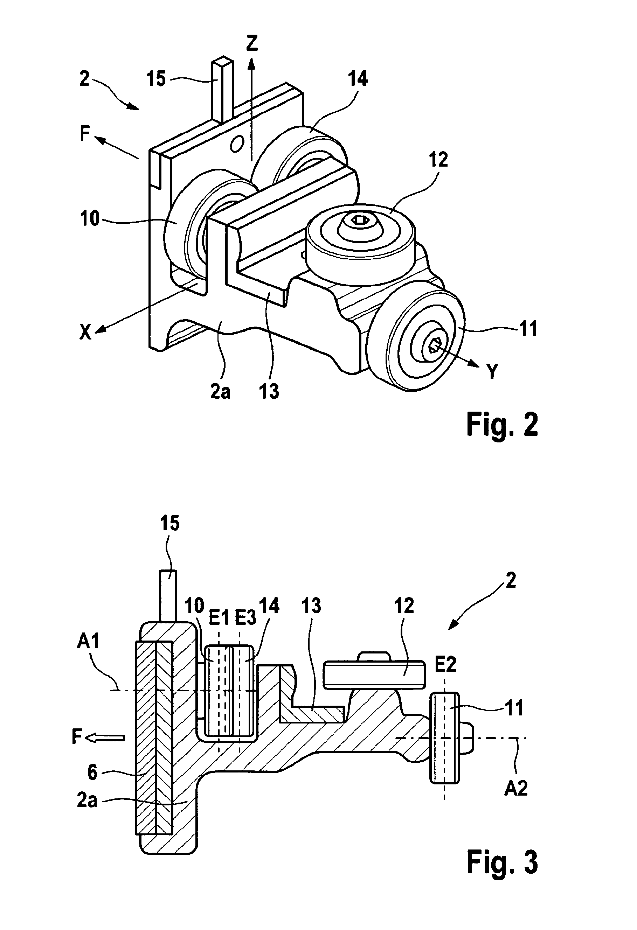

Die schematische Schnittansicht von Figur 1 zeigt die Transportvorrichtung 1 als horizontalen Querschnitt, wobei das obere, in der Figur 1 dargestellte Förderelement 2 ein Produkt 20, das auf einem Transportband 4 angeordnet ist, mittels eines Schiebefingers 15 transportiert. Das in der Figur 1 unten dargestellte Förderelement 2 (das der Übersichtlichkeit halber ohne entsprechende Bezugszeichen der einzelnen Bauteile dargestellt ist) wird über eine Laufschiene 3 zur Produktzuführung zurückgeführt. Wie aus der schematischen Schnittansicht von Figur 1 weiter ersichtlich, umfasst das Förderelement 2 einen Grundkörper 2a, an dem Permanentmagnete 6 angeordnet sind, die durch eine resultierende Magnetkraft F mit einer Linearmotor-Antriebsvorrichtung 5 in Wirkverbindung stehen, die das Förderelement 2 antreibt. Das Förderelement 2 weist ferner eine erste Laufrolle 10 auf, die in Laufrichtung A auf der linken Seite des Förderelements 2 angeordnet ist, sowie eine zweite Laufrolle 11 auf, die in Laufrichtung auf der rechten Seite des Förderelements 2 angeordnet ist. Diese erste Laufrolle 10 und zweite Laufrolle 11 stützen das Förderelement 2 an der Laufschiene 3 in vertikal entgegengesetzten Richtungen jeweils mit einer Kraft Fz ab. Parallel zur ersten Laufrolle 10 ist eine dritte Laufrolle 14 (vergl. Fig. 2) angeordnet. Zudem ist auf dem Grundkörper 2a als Führungseinrichtung eine horizontale Führungsrolle 12 angeordnet, die das Förderelement 2 an einem Profilvorsprung 3a der Laufschiene 3 aufgrund der resultierenden Magnetkraft F anpressbar mit einer Gegenkraft F abstützt. Achsen A1, A2 der Laufrollen 10 und 11 sind vertikal versetzt zueinander so angeordnet, dass beide Kräftepaare (F, F; Fz, Fz) stets ein Momentengleichgewicht bilden. Somit wird eine Vorspannung über die Hebelwirkung durch die vertikal versetzt angeordneten Achsen A1, A2 der Laufrollen 10, 11 erreicht, so dass ein Momentengleichgewicht besteht. Hierbei ist die Achse A2 der zweiten Laufrolle 11 an der Laufschiene 3 weiter innen angeordnet als die Achse A1 der ersten Laufrolle 10. Ein aus der Magnetkraft F resultierendes Kippmoment wird durch das Kräftepaar an den Laufrollen 10, 14, und 11 abgestützt. Darüber hinaus weist das Förderelement 2 ein Gleitelement 13 auf, das mit dem Profilvorsprung 3a der Laufschiene 3 auf der zur Führungsrolle 12 gegenüberliegenden Seite in Kontakt steht, um das Förderelement 2 zu führen.

Figur 2 zeigt eine perspektivische Darstellung des Förderelements 2 von Figur 1, bei dem eine dritte Laufrolle 14 angeordnet ist, sowie die Achsenrichtungen X, Y und Z eines dreidimensionalen Koordinatensystems. Wie aus Figur 2 zusammen mit Figur 1 ersichtlich, stützen die Laufrollen 10 und 14 das Förderelement 2 in der positiven Z-Achsenrichtung ab und die Laufrolle 11 das Förderelement 2 in negativer Z-Achsenrichtung ab, während die Führungsrolle 12 und das Gleitelement 13 die Führung in der X-Achsenrichtung gewährleisten. Dadurch ist das Förderelement 2 nur in der X-Achsenrichtung beweglich, die die Laufrichtung des Förderelements 2 bildet.

Figur 3 zeigt eine horizontale Schnittansicht des Förderelements 2 von Figur 2, die insbesondere die Positionsbeziehungen der ersten Laufrolle 10, zweiten Laufrolle 11 und dritten Laufrolle 14 näher veranschaulicht. Wie aus Figur 3 ersichtlich, ist die erste Laufrolle 10 auf einer ersten vertikalen Ebene E1 angeordnet, die zweite Laufrolle 11 auf einer zweiten vertikalen Ebene E2 angeordnet, und die dritte Laufrolle 14 auf einer dritten vertikalen Ebene E3 angeordnet, die alle parallel zueinander angeordnet sind. Wie aus Figur 3 ferner ersichtlich, sind die Achsen A1, A2 der Laufrollen 10 und 11 vertikal versetzt zueinander angeordnet.

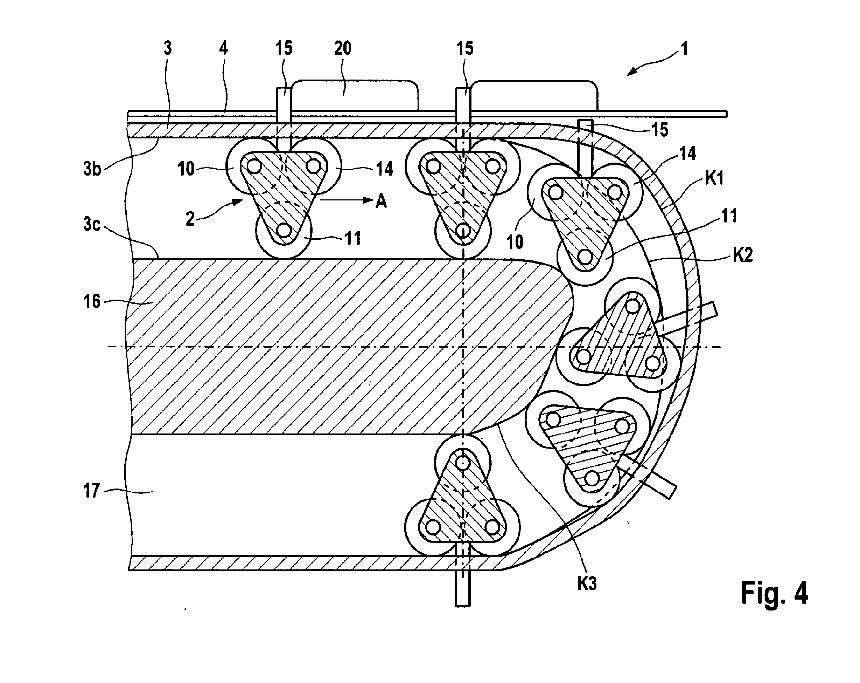

Figur 4 zeigt eine prinzipielle horizontale Schnittansicht des Umlenkbereichs der erfindungsgemäßen Transportvorrichtung 1. In Figur 4 sind mehrere Förderelemente 2 in Laufrichtung A versetzt dargestellt, um den Bewegungsablauf dieser Förderelemente 2 bei der Umlenkung besser zu veranschaulichen. Das durch die hier nicht sichtbare Linearmotor-Antriebsvorrichtung 5 angetriebene Förderelement 2 befördert das Produkt 20 auf dem Transportband 4, indem der Schiebefinger 15 das Produkt 20 auf dem Transportband 4 vorwärts schiebt. Bei dieser linearen Bewegung des Förderelements 2 rollen die erste Laufrolle 10 und die dritte Laufrolle 14 auf der inneren Lauffläche 3b der Laufschiene 3 ab, während die zweite Laufrolle 11 auf der Lauffläche 3c eines Kernbereichs 16 der Laufschiene 3 abrollt. Zur 180°-Umlenkung des Förderelements 2 sind im Umlenkbereich jeweils separate Kurvenbahnen K1, K2 und K3 auf der Laufschiene 3 so ausgebildet, dass das Förderelement 2 in Laufrichtung zuerst senkrecht zur Laufrichtung abgesenkt wird, damit der Schiebefinger 15 durch eine nicht drehende Bewegung aus dem Eingriff mit dem Produkt 20 kommt, bevor die Umlenkbewegung des Förderelements 2 erfolgt. Bei diesem Bewegungsablauf rollt die dritte Laufrolle 14 auf der Kurvenbahn K1 ab, die die innere Lauffläche 3b der Laufschiene 3 bildet, die erste Laufrolle 10 auf der Kurvenbahn K2 ab, die als Versatz auf der Laufschiene 3 ausgebildet ist, und die zweite Laufrolle 11 wie bisher kontinuierlich auf der Kurvenbahn K3 ab, die die Lauffläche 3c des Kernbereichs 16 der Laufschiene 3 bildet. Insbesondere die Bahnkurve der dritten Kurvenbahn K3 repräsentiert hierbei mit ihren unterschiedlichen aufeinanderfolgenden Radien die Absenkbewegung mit der darauf folgenden Schwenkbewegung, die zudem durch die Abrollbewegung der Laufrollen 10 und 14 auf den Kurvenbahnen K2 und K1 erzeugt wird. Ein Kanal 17 der Laufschiene 3 zur Bewegung der Förderelemente 2 kann bei der Produktzuführung am in Figur 4 nicht dargestellten gegenüberliegenden Ende der Transportvorrichtung 1 normal, d. h. mit konstanten Radien, und damit kostengünstiger ausgebildet sein, da eine getrennte Schwenk- und Anhebungsbewegung der Förderelemente 2 zwingend nicht erforderlich ist.

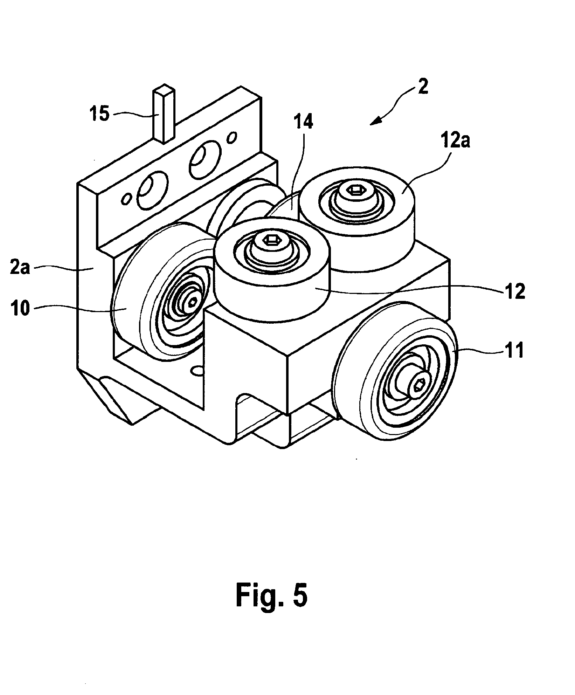

Figur 5 zeigt eine perspektivische Darstellung eines zweiten Ausführungsbeispiels mit einem alternativen Förderelement 2 der erfindungsgemäßen Transportvorrichtung 1. In Figur 5 sind gleiche Bauteile im zweiten Ausführungsbeispiel mit den gleichen Bezugszeichen wie im ersten Ausführungsbeispiel gekennzeichnet. Bei diesem Ausführungsbeispiel sind anstelle der Führungsrolle 12 und des Gleitelementes 13 beim in Figur 2 dargestellten ersten Ausführungsbeispiel als Führungseinrichtung zwei in Laufrichtung hintereinander angeordnete Führungsrollen 12 und 12a auf dem Grundkörper 2a angeordnet. Diese beiden Führungsrollen 12 und 12a stützen das Förderelement 2 aufgrund der resultierenden Magnetkraft F am hier nicht dargestellten Profilvorsprung 3a der Laufschiene 3 ab. Ferner ist aus Figur 5 die stark versetzte Anordnung der Laufrollen 10 und 14 ersichtlich, die bei der in Figur 4 beschriebenen Umlenkung des Förderelements 2 auf den separaten Kurvenbahn an K1 und K2 abrollen bzw. abgestützt werden.

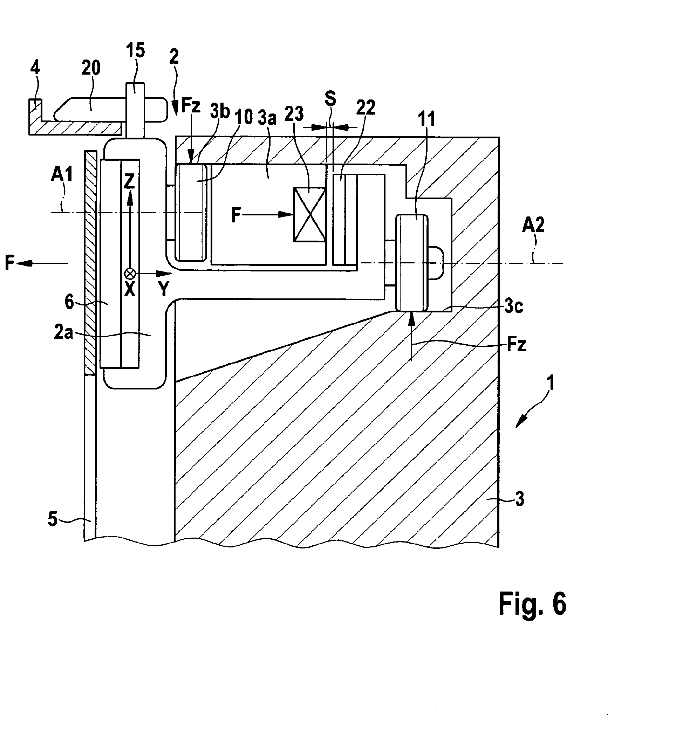

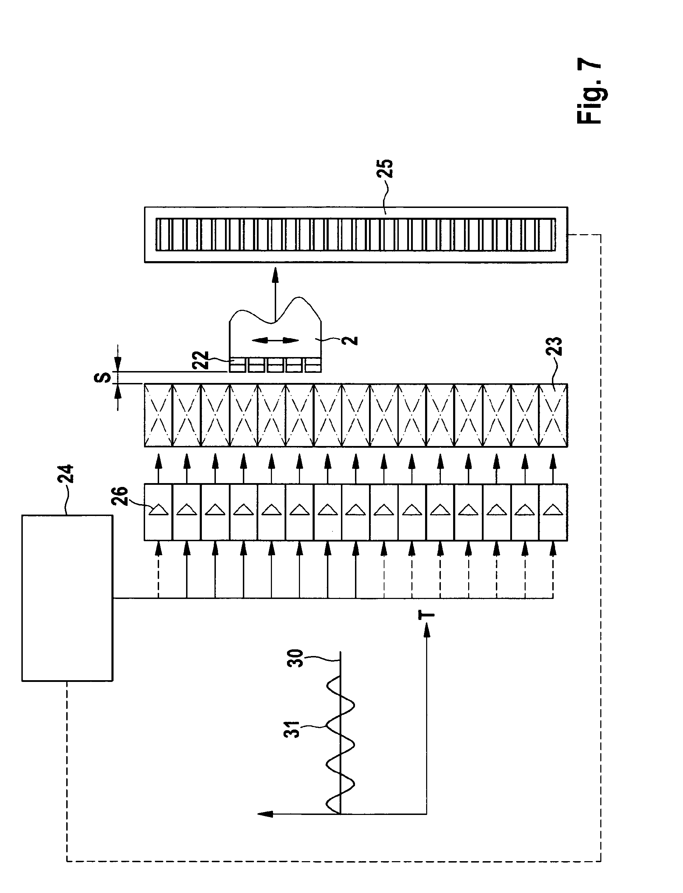

Nachfolgend wird unter Bezugnahme auf die Figuren 6 und 7 eine Transportvorrichtung gemäß einem dritten Ausführungsbeispiel der Erfindung beschrieben, wobei gleiche bzw. funktional gleiche Teile mit den gleichen Bezugszeichen wie vorhergehenden Ausführungsbeispiel bezeichnet sind.

Wie aus Figur 6 ersichtlich ist, weist das Förderelement 2 des dritten Ausführungsbeispiels anstelle von Führungsrollen ein elektromagnetisches Führungselement 22 auf. Das elektromagnetische Führungselement umfasst dabei Permanentmagnete 22, welche am Förderelement 2 angeordnet sind, sowie Spulen 23, welche an der Laufschiene 3, genauer am Profilvorsprung 3a der Laufschiene, angeordnet sind. Ein Abstand S zwischen den Spulen 23 und den Permanentmagneten 22 wird dabei mittels einer Steuerung 24 konstant gehalten.

Figur 7 zeigt die prinzipielle Darstellung der Funktionsweise der Transportvorrichtung gemäß dem dritten Ausführungsbeispiel. An der Laufschiene 3 ist ein Wegsensor 25 angeordnet, welcher mit der Steuerung 24 verbunden ist und eine Position des Förderelements 2 bestimmen kann. Die Steuerung 24 ist ferner über Leitungen mit einer Vielzahl von Stromrichtern 26 verbunden, welche die Spulen 23 speisen. In Figur 7 sind dabei die inaktiven Stromrichter durch die gestrichelten Pfeile zwischen der Steuerung 24 und den Stromrichtern 26 erkennbar. Die Steuerung 24 regelt dabei die Abstoßungskräfte zwischen den autonomen, jeweils über einzelne Stromrichter 26, gespeisten Spulen 23 und den mit den Permanentmagneten 22 bestückten Förderelementen 2. Entsprechend einer Positionsrückmeldung über den Wegsensor 25, welcher die Position des Förderelements 2 an die Steuerung 24 übermittelt, generiert die Steuerung 24 an den von den Permanentmagneten 22 überdeckten Spulen bzw. den zugehörigen Stromrichtern 26 konstante Steuerspannungen. Die Spannungs- und Magnetkraftbeträge können über eine überlagerte Abstandsregelung dabei individuell verändert werden. Hierfür wird ein Abstand S zwischen den Permanentmagneten 22 und den Spulen 23 konstant bestimmt, wobei eine Abstandsmessung vorzugsweise kontinuierlich ausgeführt wird. Zur Abstandsmessung wird dabei der Steuerspannung 30 eine Trägerfrequenz eines Oszillators (Schwingkreis) überlagert. In Figur 7 ist die Oszillatorspannung mit dem Bezugszeichen 31 gekennzeichnet, wobei die Steuerspannung 30 und die Oszillatorspannung 31 über der Zeit T aufgetragen sind. Die sich bei einer Abstandsänderung ergebende Frequenzänderung des Oszillatorsignals dient dabei als Ist-Wert für den Abstand S. Der Ist-Wert für den Abstand S wird dann zur Abstandsregelung durch die Steuerung 24 verwendet.

Die Transportvorrichtung des dritten Ausführungsbeispiels weist somit ein elektromagnetisch vorgespanntes Förderelement 2 auf. Dies führt insbesondere im Kurvenbereich der Laufschiene zu sehr großen Vorteilen, da eine kontaktlose Führung des Förderelements möglich ist. Hierdurch kann ein Verschleiß sowohl an dem Förderelement als auch an der Laufschiene 3 vermieden werden. Durch die Regelung des Abstandes S zwischen den Permanentmagneten 22 und den Spulen 23 kann darüber hinaus eine gewünschte Vorspannung des Förderelements 2 realisiert werden. Ansonsten entspricht dieses Ausführungsbeispiel den vorhergehenden Ausführungsbeispielen, so dass auf die dort gegebene Beschreibung verwiesen werden kann.

Die in den Ausführungsbeispielen beschriebene erfindungsgemäße Transportvorrichtung 1 weist somit gegenüber dem Stand der Technik den Vorteil auf, dass eine spielfreie Führung der Förderelemente 2 auch in Kurvenbereichen bzw. am Übergang von einem Linear- zu einem Kurvenbereich gegeben ist. Durch die dabei erreichte konstante Abstütz- bzw. Lagerbelastung kann eine signifikante Verlängerung der Lebensdauer bzw. Dauerhaltbarkeit der bewegten Bauteile des Förderelements 2 und der Laufschiene 3 erreicht werden.

Insbesondere infolge der ballig ausgebildeten Oberflächen der Laufrollen sind eine Schmierung der Laufrollen und die damit verbundene Verunreinigung der Laufschiene 3 nicht erforderlich. Durch die unterschiedlichen Kurvenbahnen auf der Laufschiene 3 kann eine kurvengesteuerte individuell angepasste Korrekturbewegung der Laufrollen 10, 11, 14 des Förderelements 2 im Umlenkbereich erfolgen. Das für das Förderelement 2 der erfindungsgemäßen Transportvorrichtung 1 verwendete Führungssystem mit profilfreien Lauf- und Führungsrollen ist im Hinblick auf Toleranzen bei der Fertigung der Bauteile zudem außerordentlich fehlertolerant und gegenüber Störeinflüssen unanfällig.

## Patentansprüche

1. Transportvorrichtung zur Förderung eines Produkts (20), umfassend:
- ein bewegbares Förderelement (2) zum Fördern eines Produkts,
- eine ortsfeste, umlaufend angeordnete Laufschiene (3) zur Führung des Förderelements (2), und
- eine Linearmotor-Antriebsvorrichtung (5) zum Antrieb des Förderelements (2),
- wobei das Förderelement (2) einen Grundkörper (2a) und einen Permanentmagneten (6) aufweist, der mit der Linearmotor-Antriebsvorrichtung (5) in Wirkverbindung steht, und
- wobei das Förderelement (2) eine erste Laufeinrichtung (10) aufweist, die in Laufrichtung (A) des Förderelements (2) auf einer Seite des Förderelements (2) angeordnet ist, und eine zweite Laufeinrichtung (11) aufweist, die in Laufrichtung (A) des Förderelements (2) auf der anderen Seite des Förderelements (2) angeordnet ist,
- **dadurch gekennzeichnet, dass** die erste und zweite Laufeinrichtung (10, 11) das Förderelement (2) an der Laufschiene (3) in entgegengesetzten Richtungen parallel zu einer ersten Richtung (Z) mit einer Kraft (F_{z}) abstützen,
- wobei das Förderelement (2) einen Schiebefinger (15) aufweist, welcher mit dem Produkt in Kontakt bringbar ist,
- wobei das Förderelement (2) eine Führungseinrichtung (12, 22) aufweist, die so angeordnet ist, dass aufgrund einer resultierenden Vorspannkraft (F) zwischen dem Permanentmagneten (6) und der Linearmotor-Antriebsvorrichtung (5) eine Führung des Förderelements (2) unter Abstützung mit einer Gegenkraft (F) an der Laufschiene (3) ausführt, wobei die Vorspannkraft (F) in einer zweiten Richtung (Y) wirkt, wobei die Laufrichtung (A), die erste Richtung (Z) und die zweite Richtung (Y) jeweils senkrecht zueinander stehen,
- wobei die erste und/oder zweite Laufeinrichtung (10, 11) eine profilfreie Laufrolle ist, die nur in formschlussfreier Berührung mit der Laufschiene (3) steht, oder die erste und/oder zweite Laufeinrichtung ein elektromagnetisches oder pneumatisches Laufelement ist, und
- wobei die erste und zweite Laufrichtung (10, 11) und die Führungseinrichtung (12, 22) derart am Förderelement (2) angeordnet sind, dass das durch die Vorspannkraft und die Gegenkraft gebildete Kräftepaar (F, F) und das durch die Laufeinrichtungen (10, 11) erzeugte Kräftepaar (F_{z}**,** F_{z}) ein Momentengleichgewicht bilden.

2. Transportvorrichtung nach Anspruch 1, wobei die Führungseinrichtung (12) eine Führungsrolle ist.

3. Transportvorrichtung nach Anspruch 2, wobei die Führungsrolle (12) eine profilfreie Rolle ist, die nur in formschlussfreier Berührung mit der Laufschiene (3) steht.

4. Transportvorrichtung nach Anspruch 2 oder 3, wobei Achsen (A1, A2) der ersten und zweiten Laufrollen (10, 11) am Förderelement (2) versetzt zueinander angeordnet sind.

5. Transportvorrichtung nach einem der vorhergehenden Ansprüche, wobei das Förderelement (2) ein Gleitelement (13) aufweist, welches mit der Laufschiene (3) zur Führung des Förderelements (2) in Kontakt ist.

6. Transportvorrichtung nach Anspruch 5, wobei die Laufschiene (3) einen Profilvorsprung (3a) aufweist, der zwischen der Führungseinrichtung (12, 22) und dem Gleitelement (13) angeordnet ist.

7. Transportvorrichtung nach Anspruch 2, wobei zwei Führungsrollen (12, 12a) vorgesehen sind.

8. Transportvorrichtung nach einem der Ansprüche 2 bis 7, wobei die erste Laufrolle (10) und eine dritte Laufrolle (14) auf einer Seite des Förderelements (2) angeordnet sind.

9. Transportvorrichtung nach Anspruch 8, wobei die erste Laufrolle (10) in einer ersten Ebene (E1) und die zweite Laufrolle (11) in einer zweiten Ebene (E2) angeordnet sind und die Ebenen (E1, E2) parallel zueinander angeordnet sind, und
wobei die dritte Laufrolle (14) in einer
dritten Ebene (E3) angeordnet, ist, welche parallel zu den Ebenen (E1, E2) angeordnet ist.

10. Transportvorrichtung nach Anspruch 8 oder 9, wobei an einem Umlenkbereich (16) der Laufschiene (3) für jede der Laufrollen (10, 11) jeweils separate Kurvenbahnen (K1, K2, K3) vorhanden sind, wobei sich die Bahnkurven der Kurvenbahnen voneinander unterscheiden, um eine Absenkung des Schiebefingers (15) senkrecht zur Förderrichtung vor der Umlenkung des Förderelements (2) zu ermöglichen.

11. Transportvorrichtung nach Anspruch 1, wobei die Führungseinrichtung (22) ein elektromagnetisches oder pneumatisches Führungselement ist.

12. Transportvorrichtung nach Anspruch 11, wobei die elektromagnetische Führungseinrichtung (22) eine Vielzahl von Spulen (23) an der Laufschiene (3) und wenigstens einen Permanentmagneten (22) am Förderelement (2) umfasst.

13. Transportvorrichtung nach Anspruch 12, ferner umfassend eine Steuerung - (24), welche eine Vorspannung auf das Förderelement (2) durch Regelung eines Abstandes (S) zwischen den Spulen (23) und den mindestens einen Permanentmagneten (22) regelt.

14. Transportvorrichtung nach einem der vorhergehenden Ansprüche, ferner umfassend einen Wegsensor (25) zur Positionsbestimmung der Förderelemente (2).

## Claims

1. Transport apparatus for the conveyance of a product (20), comprising:
- a movable conveyor element (2) for conveying a product,
- a stationary, continuously arranged running rail (3) for the guidance of the conveyor element (2), and
- a linear-motor drive apparatus (5) for driving the conveyor element (2),
- wherein the conveyor element (2) has a basic body (2a) and a permanent magnet (6), which is in operative connection with the linear-motor drive apparatus (5), and
- wherein the conveyor element (2) has a first running unit (10), which is arranged on one side of the conveyor element (2), as seen in the running direction (A) of the conveyor element (2), and a second running unit (11), which is arranged on the other side of the conveyor element (2), as seen in the running direction (A) of the conveyor element (2),
- **characterized in that** the first and second running units (10, 11) support the conveyor element (2) on the running rail (3) with a force (F_{Z}) in opposing directions parallel to a first direction (Z),
- wherein the conveyor element (2) has a sliding finger (15) which can be brought into contact with the product,
- wherein the conveyor element (2) has a guide unit (12, 22) which is arranged such that, based on a resulting preload force (F) between the permanent magnet (6) and the linear-motor drive apparatus (5), it guides the conveyor element (2) on the running rail (3), supported by a counterforce (F), the preload force (F) acting in a second direction (Y), wherein the running direction (A), the first direction (Z) and the second direction (Y) are each perpendicular to one another,
- wherein the first and/or second running unit (10, 11) is a profile-free track roller which is in contact with the running rail (3) only in a non-form-fitting manner, or the first and/or second running unit is an electromagnetic or pneumatic running element, and
- wherein the first and second running units (10, 11) and the guide unit (12, 22) are arranged on the conveyor element (2) in such a manner that the force couple (F, F), which is generated by the preload force and the counterforce, and the force couple (F_{Z}, F_{Z}), which is generated by the running units (10, 11), form an equilibrium of moments.

2. Transport apparatus according to Claim 1, wherein the guide unit (12) is a guide roller.

3. Transport apparatus according to Claim 2, wherein the guide roller (12) is a profile-free roller which is in contact with the running rail (3) only in a non-form-fitting manner.

4. Transport apparatus according to Claim 2 or 3, wherein axes (A1, A2) of the first and second track rollers (10, 11) on the conveyor element (2) are offset in relation to one another on the conveyor element (2).

5. Transport apparatus according to one of the preceding claims, wherein the conveyor element (2) has a glide element (13) which is in contact with the running rail (3) for the guidance of the conveyor element (2).

6. Transport apparatus according to Claim 5, wherein the running rail (3) has a profiled protrusion (3a) which is arranged between the guide unit (12, 22) and the glide element (13).

7. Transport apparatus according to Claim 2, wherein two guide rollers (12, 12a) are provided.

8. Transport apparatus according to one of Claims 2 to 7, wherein the first track roller (10) and a third track roller (14) are arranged on one side of the conveyor element (2).

9. Transport apparatus according to Claim 8, wherein the first track roller (10) is arranged in a first plane (E1) and the second track roller (11) is arranged in a second plane (E2), and the planes (E1, E2) are arranged parallel to one another, and wherein the third track roller (14) is arranged in a third plane (E3), which is arranged parallel to the planes (E1, E2).

10. Transport apparatus according to Claim 8 or 9, wherein separate curved tracks (K1, K2, K3) each are available in a deflection region (16) of the running rail (3) for each of the tracks rollers (10, 11), wherein the curves of the curved tracks are different from one another in order to enable lowering of the sliding finger (15) perpendicular to the conveying direction prior to the deflection of the conveyor element (2).

11. Transport apparatus according to Claim 1, wherein the guide unit (22) is an electromagnetic or pneumatic guide element.

12. Transport apparatus according to Claim 11, wherein the electromagnetic guide unit (22) has a multiplicity of coils (23) on the running rail (3) and comprises at least one permanent magnet (22) on the guide element (2).

13. Transport apparatus according to Claim 12, further comprising a controller (24) which adjusts a preload on the conveyor element (2) by adjustment of a distance (S) between the coils (23) and the at least one permanent magnet (22).

14. Transport apparatus according to one of the preceding claims, further comprising a displacement sensor (25) for determining the position of the conveyor elements (2).

## Revendications

1. Dispositif de transport pour le transport d'un produit (20), comprenant :
- un élément de transport déplaçable (2) pour déplacer un produit,
- un rail de roulement (3) fixe disposé sur le pourtour, pour guider l'élément de transport (2), et
- un dispositif d'entraînement (5) à moteur linéaire pour l'entraînement de l'élément de transport (2),
- l'élément de transport (2) présentant un corps de base (2a) et un aimant permanent (6) qui est en liaison fonctionnelle avec le dispositif d'entraînement (5) à moteur linaire, et
- l'élément de transport (2) présentant un premier dispositif de roulement (10) qui est disposé dans la direction de roulement (A) de l'élément de transport (2) d'un côté de l'élément de transport (2), et un deuxième dispositif de roulement (11) qui est disposé dans la direction de roulement (A) de l'élément de transport (2) de l'autre côté de l'élément de transport (2),
- **caractérisé en ce que** le premier et le deuxième dispositif de roulement (10, 11) supportent l'élément de transport (2) sur le rail de roulement (3) dans des directions opposées parallèlement à une première direction (Z) avec une force (F_{Z}),
- l'élément de transport (2) présentant un doigt de poussée (15) qui peut être amené en contact avec le produit,
- l'élément de transport (2) présentant un dispositif de guidage (12, 22) qui est disposé de telle sorte que du fait d'une force de précontrainte (F) résultante entre l'aimant permanent (6) et le dispositif d'entraînement (5) à moteur linéaire, il guide l'élément de transport (2) avec l'assistance d'une force conjuguée (F) sur le rail de roulement (3), la force de précontrainte (F) agissant dans une deuxième direction (Y), la direction de roulement (A), la première direction (Z) et la deuxième direction (Y) étant à chaque fois perpendiculaires les unes aux autres,
- le premier et/ou le deuxième dispositif de roulement (10, 11) étant un rouleau de roulement non profilé qui est seulement en contact sans engagement par coopération de forme avec le rail de roulement (3) ou le premier et/ou le deuxième dispositif de roulement étant un élément de roulement électromagnétique ou pneumatique, et
- le premier et le deuxième dispositif de roulement (10, 11) et le dispositif de guidage (12, 22) étant disposés sur l'élément de transport (2) de telle sorte que la paire de forces (F, F) formée par la force de précontrainte et la force conjuguée et la paire de forces (F_{z}, F_{z}) produite par les dispositifs de roulement (10, 11) forment un équilibre de couples.

2. Dispositif de transport selon la revendication 1, dans lequel le dispositif de guidage (12) est un rouleau de guidage.

3. Dispositif de transport selon la revendication 2, dans lequel le rouleau de guidage (12) est un rouleau non profilé qui est en contact sans engagement par coopération de forme avec le rail de roulement (3).

4. Dispositif de transport selon la revendication 2 ou 3, dans lequel des axes (A1, A2) des premier et deuxième rouleaux de roulement (10, 11) sont disposés de manière décalée l'un par rapport à l'autre sur l'élément de transport (2).

5. Dispositif de transport selon l'une quelconque des revendications précédentes, dans lequel l'élément de transport (2) présente un élément de glissement (13) qui est en contact avec le rail de roulement (3) pour guider l'élément de transport (2).

6. Dispositif de transport selon la revendication 5, dans lequel le rail de roulement (3) présente une saillie profilée (3a) qui est disposée entre le dispositif de guidage (12, 22) et l'élément de glissement (13).

7. Dispositif de transport selon la revendication 2, dans lequel deux rouleaux de guidage (12, 12a) sont prévus.

8. Dispositif de transport selon l'une quelconque des revendications 2 à 7, dans lequel le premier rouleau de roulement (10) et un troisième rouleau de roulement (14) sont disposés d'un côté de l'élément de transport (2).

9. Dispositif de transport selon la revendication 8, dans lequel le premier rouleau de roulement (10) est disposé dans un premier plan (E1) et le deuxième rouleau de roulement (11) est disposé dans un deuxième plan (E2), et les plans (E1, E2) sont disposés parallèlement l'un à l'autre, et dans lequel le troisième rouleau de roulement (14) est disposé dans un troisième plan (E3) qui est parallèle aux plans (E1, E2).

10. Dispositif de transport selon la revendication 8 ou 9, dans lequel des trajectoires curvilignes (K1, K2, K3) à chaque fois séparées sont prévues au niveau d'une région de déviation (16) du rail de roulement (3) pour chacun des rouleaux de roulement (10, 11), les courbes de trajectoire des trajectoires curvilignes étant distinctes les unes des autres, afin de permettre un abaissement du doigt de poussée (15) perpendiculairement à la direction de transport avant la déviation de l'élément de transport (2).

11. Dispositif de transport selon la revendication 1, dans lequel le dispositif de guidage (22) est un élément de guidage électromagnétique ou pneumatique.

12. Dispositif de transport selon la revendication 11, dans lequel le dispositif de guidage électromagnétique (22) comprend une pluralité de bobines (23) sur le rail de roulement (3) et au moins un aimant permanent (22) sur l'élément de transport (2).

13. Dispositif de transport selon la revendication 12, comprenant en outre une commande (24), qui régule une précontrainte sur l'élément de transport (2) par régulation d'une distance (S) entre les bobines (23) et l'au moins un aimant permanent (22).

14. Dispositif de transport selon l'une quelconque des revendications précédentes, comprenant en outre un capteur de position (25) pour déterminer la position des éléments de transport (2).
